(19) Europäisches Patentamt
European Patent Office
Office européen des brevets

(11) Publication number: **0 039 769**
**B1**

(12) **EUROPEAN PATENT SPECIFICATION**

(45) Date of publication of patent specification: **04.12.85**

(51) Int. Cl.[4]: **B 60 C 1/00,** C 08 J 5/10, C 08 L 21/00

(21) Application number: **81102339.9**

(22) Date of filing: **27.03.81**

(54) **New compounding formulas for rubber-metal adhesion (use of cobalt propionate) in tines.**

(30) Priority: **08.05.80 US 147813**

(43) Date of publication of application:
**18.11.81 Bulletin 81/46**

(45) Publication of the grant of the patent:
**04.12.85 Bulletin 85/49**

(84) Designated Contracting States:
**AT BE DE FR GB IT LU SE**

(56) References cited:
**CS-A- 125 228**
**FR-A-1 545 734**
**GB-A-1 122 528**
**GB-A-1 169 366**

**The file contains technical information submitted after the application was filed and not included in this specification**

(73) Proprietor: **THE FIRESTONE TIRE & RUBBER COMPANY**
**1200 Firestone Parkway**
**Akron, Ohio 44317 (US)**

(72) Inventor: **Davis, James A.**
**10688 Mogadore Road**
**Uniontown Ohio 44685 (US)**
Inventor: **Kang, Jung W.**
**6150 Terrace Hills Drive**
**Clinton Ohio 44216 (US)**
Inventor: **Koch, Robert C.**
**1121 Merriman Road**
**Akron Ohio 44313 (US)**

(74) Representative: **Kraus, Walter, Dr. et al**
**Patentanwälte Kraus Weisert & Partner Thomas-Wimmer-Ring 15**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 039 769 B1

**Description**

This invention is directed to a tire having improved adhesion between a cured rubber skim stock of conventional composition, and brassed or zinc coated metal reinforcing members embedded therein.

In the production of rubber articles such as hose, pneumatic tires or power transmission belts such as V-belts, toothed positive drive belts, etc., it is generally necessary to reinforce the rubber or elastomeric product. In the past, textile materials have been employed for this purpose. However, wire cord has been found to be more desirable under certain conditions of use, for example, in pneumatic tires of the radial ply type. Maximum reinforcement of the rubber is obtained when maximum adhesion is produced and retained between the laminate of a contiguous rubber skim stock and the metal reinforcing element as used to form a unitary structure. Of equal importance is the requirement that, for example, the laminate of the reinforcing metal element and contiguous rubber remain in a bonded relationship with each other throughout the useful life of the reinforced structure in which the laminate is used.

To achieve satisfactory rubber-to-metal bonding, numerous methods have been developed. For example, US—A—2,720,479 describes a system wherein a phenolic resin and a brominated isoolefin-polyolefin interpolymer are dissolved in a suitable liquid carrier and the resulting adhesive composition is spread on rubber which is to be bonded to metal. The rubber and metal are subsequently pressed together and vulcanized. US—A—2,581,920 also describes the use of halogenated polymers to bond rubber to metal.

The disclosure of US—A—3,903,026 teaches the preparation of a rubber composition having improved metal adhesion properties even after thermal aging; this is disclosed to be achieved by compounding cobalt carboxylate and magnesium oxide (0.1 to 4 phr) into rubber, cobalt propionate is not mentioned. US—A—4,137,359 discloses vulcanizable elastomeric compositions having improved adhesion to metals. This is accomplished by adding to the composition organic carboxylic acid salts of two different metals combined with one or more carboxylic acid. One of the metals is an oxidizing constituent and the second metal is a catalyst for enhancing polymerization. Included among the oxidizing constituents is cobalt and one of the acids disclosed is propionic acid. See column 4, line 62. However, nothing is disclosed regarding the effect of cobalt propionate when used alone.

US—A—1,919,718 discloses and claims methods and compositions for adhering rubber to metals. The invention comprises adding certain metal salts of (preferably) high molecular weight fatty acids to a rubber composition to form a cement. Cobalt is the preferred metal and the acids comprise those non-volatile fatty acids which form "soaps". Cobalt stearate is used as an illustrative example. Patentee additionally discloses, however, that fatty acids of lower molecular weight can be used and specifically names the acetate, butyrate, oxalate and succinate (page 2, lines 33—35); cobalt propionate is not mentioned.

US—A—2,912,355 relates to improving the adhesion of rubber to metals.

The objects of the invention are achieved by adding any one of cobalt formate, acetate, butyrate, oleate, citrate, tartrate, or benzoate. There is no mention of cobalt propionate.

US—A—3,514,370 relates to the addition of a cobalt salt to an elastomeric composition to improve adhesion of the latter to metal surfaces. Included among the cobalt salts are the acetate, linoleate, stearate, oleate, and naphthenate; cobalt propionate is not mentioned.

GB—A—1,169,366 and GB—A—1,122,528 disclose improving the adhesion of natural rubber to a metal surface of steel, brass or zinc by the addition of salts of cobalt with various low and higher molecular weight organic acids. According to the disclosure in the specification, the cobalt salt is preferably a salt of an organic acid such as cobalt linoleate, naphthenate, stearate, oleate, acetate, or resinate. In addition, the specific examples also mention the use of cobalt octoate; however, cobalt propionate is not mentioned.

US—A—3,993,847 relates to the addition of silica to a rubber composition to improve the adhesion to metal. However, the patentee discloses further that, in addition to adding the silica to promote the bond strength, it is usually preferable to use compounds of cobalt and organic carboxylic acids. As examples of these, there are mentioned the linoleates, stearates, oleates, acetates, resinates, naphthenates, and the like; cobalt propionate is not mentioned.

It is also known from FR—A—1,545,734 that 0.1 phr and more of an organic metal salt like cobalt propionate can be used to improve the mechanical properties of curable mixtures of 95% polybutadiene and 5% polyamide.

US—A—3,998,992 relates to improving the bond strength of composite articles of rubber adhered to ferrous metal substrates. So-called "processing aids" as listed in column 7, lines 9—12, include materials such as the metal salts of naphthenates, linoleates, stearates, oleates, acetates, and resinates. Patentee states that, generally, the cobalt salts are most often used although salts of iron, nickel, copper or aluminum are also effective; cobalt propionate is not mentioned. Improved adhesion in accordance with this patent is achieved through the use of an intermediate adhesive, rubber-containing layer. It is to this intermediate layer that the cobalt salts are added.

SU—A—152,952 relates to a method of improving the adhesion of rubber to metal by adding cobalt acetate to the rubber composition; cobalt propionate is not mentioned.

US—A—4,076,668 relates to improving the adhesion of rubber compositions to a variety of bases. A specific object of the patent is to improve the adhesion of rubber compositions to the steel cords in the building of tires. In accordance with the invention disclosed in the patent improved adhesion is obtained by

adding to the rubber composition a cobalt salt of an organic acid having from 6 to about 30 carbon atoms. Exemplary cobalt salts listed are the naphthenate, stearate, octylate, octoate, oleate, resinate, linoleate, tallate and the like. In addition to the cobalt salt, however, the patentees also require the addition of a proportion of a monohydroxybenzoic acid; cobalt propionate is not mentioned.

US—A—3,897,583 also relates to improving the adhesion of rubber to metal by incorporating a cobalt salt into a rubber stock which contains an adhesive, resin-forming system. The cobalt salts used in the invention include the cobalt salts of various organic acids, such as aliphatic or alicyclic carboxylic acids having from 6 to 30 carbon atoms, such as cobalt octoate, cobalt stearate, or cobalt naphthenate; cobalt propionate is not mentioned.

US—A—4,068,041 discloses a method for rubberizing brass-plated steel cords. Improved adhesion is obtained by adding to the rubber composition a reinforcing pigment, such as silica, and a cobalt "soap" (e.g., cobalt stearate or cobalt naphthenate); cobalt propionate is not mentioned.

US—A—4,082,909 relates to a rubber composition comprising a vulcanizable rubber and a proportion of a metal salt of hydroxybenzoic acid. Cobalt is disclosed as one of the metals in a list which also includes sodium, potassium, magnesium, calcium, aluminum, iron, tin, nickel, zinc and copper. The purpose of the addition is to improve adhesive strength of rubber compositions to metal bases; cobalt propionate is not mentioned.

CS—A—125,228 discloses a method for joining rubber to metal wherein the bonding agent is the self-adhesive additive cobalt propionate added to the elastomer composition. This allows to eliminate the brass coating which greatly reduces the adhesion between rubber and metal. However, this reference does not specify the nature of metal or its surface using merely the general term 'metal' without any information as to the specific metal which is to be joined with rubber. Particularly, this reference is totally silent as to the general technical field of tire production.

The object of the invention is to provide a tire having an improved adhesion between a contiguous rubber skim stock and brassed or zinc coated metal reinforcing members embedded therein.

According to the present invention, this object is achieved by incorporating 0.5 to 15 phr of cobalt propionate into said stock prior to curing. Thus, the invention lies in the discovery that improved rubber-to-metal adhesion, and adhesion retention, can be obtained by adding to an otherwise conventional rubber skim stock composition appropriate amounts of cobalt propionate.

In the practice of this invention, cobalt propionate is mixed into a rubber skim stock composition, as described below, this composition is then brought into contiguous relationship with at least one brassed or zinc coated metal member in an unvulcanized composition, followed by vulcanization to yield the end product.

A skim stock material for use in wire belts for tires was mixed in an 1100 ml Banbury mixer. Mix times were about 7 minutes with a final Banbury temperature of about 163°C. This stock was then final mixed on a conventional two-roll mill at a temperature below 104°C. Cobalt propionate was added to the masterbatch.

Typical properties of a reinforcing belt skim stock include hardness values of over 60 shore A, 300% modulus values of at least 82740 $N/mm^2$, and accompanying elongations at break of at least 250%. The known uses for such a stock would include preparation of belt skims for belted tires such as radials or bias belted. In addition this stock could be used in wire reinforced continuous belts or any other application where the rubber would come in contact with the brass plated steel wire.

The level of cobalt propionate which we found to give acceptable improvements in adhesion and adhesion retention between rubber skim stock and brass coated wire was preferably between 2 and 8 parts of cobalt propionate per 100 parts of rubber. The levels of cobalt propionate necessary to maintain adhesion in the stock appear to be directly related to the nature of the particular rubber stock, and vary from 0.5 to 15 parts per 100 parts of rubber polymer.

All testing of the wire-rubber composites was done in T-adhesion pads prepared by placing 15 μm slabs of uncured skim stock on 15.4 μm fiber reinforced backing. Sample width was 1.27 cm. Clean, brass wires were placed between two pads of the reinforced skim stocks with the wires in contact with the uncured skim at 1.27 cm intervals. The pads were placed in a curing mold and were cured for 30 minutes at 149°C. Testing was done on an Instron Universal tester at 25.4 cm per minute at 110°C. Steam bomb aging was done in a pressure vessel at 1 atmosphere, 149°C and in a saturated steam atmosphere. Humidity chamber aging was done at 90% relative humidity and 35°C.

Cobalt propionate has only recently become commercially available as it is more difficult to prepare in anhydrous form than, for example, the higher acid homologues. In addition to improving the adhesion and adhesion retention properties of conventional rubber skim stocks to brass and zinc coated steel, such as steel wire, such stocks also reflect, for example, lower heat build-up and higher modulus in comparison to other cobalt containing stocks.

The cobalt propionate utilized in the practice of our invention is commercially available and was prepared by the following reaction scheme:

$$Co(OH)_2 + 2CH_3CH_2COOH \xrightarrow[\Delta]{H_2O} Co(OCOCH_2CH_3)_2\ n\ H_2O$$

pink

$$\downarrow \Delta, -H_2O \text{ (dehydration)}$$

$$Co(OCOCH_2CH_3)_2$$

deep purple

To a suspension of cobalt hydroxide (93 g, 1 mole) in 500 ml of distilled water was added slowly propionic acid (170 g, 2.3 moles) at room temperature with a magnetic stirring. After the reaction mixture was stirred at 80°C for 3 hours, the red solution was concentrated to a half of volume and was allowed to cool at room temperature. The red solution was poured into 1.5 liters of acetone to precipitate the pink product.

The product was collected by filtration and washed with acetone. The pink product obtained was dried at 100—120°C vacuum until the product was changed to a deep purple color; yield—94%.

Analysis; Calcd. for $C_6H_{10}O_4Co$: Co; 28.78%
Found: Co; 27.9%

The cobalt propionate produced by the above procedure contained 29% cobalt; was a deep purple powder and had a specific gravity (25°C) of 1.68±0.1.

The following Examples are representative. The composition component parts are expressed in parts per hundred, phr, unless otherwise specified. These components can be utilized within the ranges specified below as they would be compounded by one skilled in the art:

Masterbatch

(a) 100 parts rubber
(b) 20 to 90 phr carbon black
(c) 0 to 20 phr naphthenic process oil
(d) 1 to 12 phr zinc oxide
(e) 0 to 5 phr stearic acid
(f) 0.1 to 5 phr antioxidant (i.e., Santoflex® 13)
(g) 0.1 to 5 phr antioxidant (i.e., Santoflex® DD)
(h) 0.5 to 5 phr cobalt propionate

Mill mix

(1) 0 to 10 phr sulfur per se or as an 80/20 preblend with extender oil
(2) 0.1 to 3 phr cure retarder [i.e., N-(Cyclohexylthio)-phthalimide]
(3) 0.2 to 5 phr cure accelerator N-oxydiethylene benzothiazole 2-sulfenamide.

Conventional compounding procedures, for both Banbury Masterbatch mixing and Final Mill mixing can be utilized with a minimum of routine experimentation for optimization.

Example I

(A) The following masterbatch composition was blended in a 1100 ml Banbury mixer for about 7 minutes with a final Banbury temperature of 163°C.

(1) Natural rubber 100 parts
(2) HAF black 50 phr
(3) Zinc oxide 8 phr
(4) Stearic acid 0.5 phr
(5) Santoflex DD®[a] 1.0 phr
(6) Naphthenic process oil[b] 2.0 phr
(7) Santoflex 13®[c] 1.0 phr
(8) Cobalt propionate 0.96 phr

[a]=6-dodecyl-1,2-dihydro-2,2,4-trimethylquinoline
[b]=a known oil of medium solvency containing a 35% minimum of naphthene ring carbons
[c]=N-(1,3-dimethylbutyl)-N'-phenyl-p-phenylenediamine
[d]=N-oxydiethylene benzothiazole 2-sulfenamide

(B) After about 7 minutes, the above masterbatch was dumped at 163—166°C on mill rolls and cooled to a temperature below 104°C followed by blending in 3 to 6 phr sulfur and 0.70 NOBS special accelerator[d] and roll mill mixing at a temperature below 104°C followed by passing the resulting blend through the mill rolls using standard ASTM handling techniques.

In this mill mixing step, the sulfur can be introduced per se or as a 80/20 preblend with a naphthenic oil in the range of 18—22% oil. The sulfur is a yellow powder, 89.5% min. of which is insoluble sulfur.

Samples of the fully compounded resulting stock were then prepared for building adhesion pads.

Static wire adhesion results were obtained utilizing T-adhesion pads prepared by placing 15 µm slabs of uncured fully compounded conventional rubber wire skim stock on 13 µm fabric reinforced rubber backing. Commercial brass-coated wires (1×5×0.25 mm diam.) were placed between two pads of the reinforced skim stock with the wires in contact with the uncured rubber skim at 1.25 cm intervals. The width of each adhesion pad was 1.25 cm. The uncured pads were placed in a mold and were cured for 30 minutes at 149°C. Unaged and aged wire adhesion results involving a conventional wire skim test compound with different levels of sulfur (3—6 phr) and with and without cobalt propionate are shown in Table I which follows uses the stock produced by this example.

TABLE I

Long term humidity aging wire adhesion study:

Evaluation of cobalt propionate in the rubber-steelcord adhesion stock of Example I

| Stock Example I | A | B | C | D | E | F | G | H |
|---|---|---|---|---|---|---|---|---|
| Compound features | | | | | | | | |
| Sulfur, phr | 3 | 3 | 4 | 4 | 5 | 5 | 6 | 6 |
| Cobalt propionate, phr | — | 0.96 | — | 0.96 | — | 0.96 | — | 0.96 |
| Humidity Chamber Aged Steelcord T-Adhesion @ 110°C, Cured 30′ @ 149°C, Cured T-Adhesion pads aged in Humidity Chamber @ 90% Relative Humidity and 35°C | | | | | | | | |
| 0 Day | | | | | | | | |
| 1×5×0.25 mm diam. brass coated wire | | | | | | | | |
| kg/m | 2407 | 3093 | 2739 | 3314 | 2714 | 3197 | 2768 | 3347 |
| % rubber coverage (visual) | (90) | (95) | (90) | (95) | (90) | (95) | (90) | (95) |
| 1×5×0.25 mm diam. zinc coated wire | | | | | | | | |
| kg/m | 211 | 3143 | 307 | 3004 | 229 | 3261 | 368 | 3118 |
| % rubber coverage | (0) | (95—100) | (0) | (90—95) | (0) | (100) | (0) | (90—95) |
| 30 Days | | | | | | | | |
| 1×5×0.25 mm diam. brass coated wire | | | | | | | | |
| kg/m | 2136 | 2743 | 2343 | 3047 | 2336 | 3068 | 2461 | 2954 |
| % rubber coverage (visual) | (80) | (85—90) | (85) | (95) | (85) | (95) | (90) | (95) |
| 1×5×0.25 mm diam. zinc coated wire | | | | | | | | |
| kg/m | 161 | 2489 | 223 | 2543 | 179 | 2597 | 214 | 2861 |
| % rubber coverage | (0) | (90) | (0) | (90—95) | (0) | (95) | (0) | (100) |

TABLE I (Cont'd)

| Stock Example I | A | B | C | D | E | F | G | H |
|---|---|---|---|---|---|---|---|---|
| 60 Days | | | | | | | | |
| 1×5×0.25 mm diam. brass coated wire | | | | | | | | |
| kg/m | 2039 | 2664 | 2214 | 2875 | 2179 | 2786 | 2286 | 2875 |
| % rubber coverage | (45) | (85) | (60—65) | (90—95) | (80) | (95) | (85) | (95—100) |
| 1×5×0.25 mm diam. zinc coated wire | | | | | | | | |
| kg/m | 221 | 1779 | 218 | 2257 | 189 | 1668 | 254 | 2197 |
| % rubber coverage | (0) | (60) | (0) | (75—80) | (0) | (80) | (0) | (90) |
| 90 Days | | | | | | | | |
| 1×5×0.25 mm diam. brass coated wire | | | | | | | | |
| kg/m | 1793 | 2250 | 2072 | 2779 | 2297 | 2739 | 2314 | 2836 |
| % rubber coverage | (60) | (80) | (75) | (90) | (80) | (90) | (85) | (95) |
| % retention | 74.5 | 82.5 | 75.6 | 83.8 | 84.6 | 85.7 | 83.6 | 84.7 |
| 1×5×0.25 mm diam. zinc coated wire | | | | | | | | |
| kg/m | 225 | 1104 | 204 | 1504 | 293 | 1593 | 257 | 2039 |
| % rubber coverage | (0) | (20—25) | (0) | (40) | (0) | (65) | (0) | (80) |
| % retention | — | 35.1 | — | 50.1 | — | 48.9 | — | 65.4 |

TABLE II

Short term wire adhesion properties:

Evaluation of cobalt propionate in the rubber-steelcord adhesion stock of Example I

| Stock Example I | A | B | C | D | E | F | G | H |
|---|---|---|---|---|---|---|---|---|
| Compound Features | | | | | | | | |
| Sulfur, phr | 3 | 3 | 4 | 4 | 5 | 5 | 6 | 6 |
| Cobalt propionate, phr | — | 0.96 | — | 0.96 | — | 0.96 | — | 0.96 |
| Normal (Unaged) Steelcord T-Adhesion @ 110°C—Cured 30′ @ 149°C | | | | | | | | |
| 1×5×0.25 mm diam. brass coated wire | | | | | | | | |
| kg/m | 2064 | 3068 | 2075 | 3229 | 2411 | 21018 | 2361 | 3304 |
| % rubber coverage | (55—60) | (90—95) | (60—65) | (95—100) | (80) | (85) | (85) | (95) |
| 1×5×0.25 mm diam. zinc coated wire | | | | | | | | |
| kg/m | 104 | 2947 | 186 | 2914 | 182 | 3329 | 214 | 3122 |
| % rubber coverage (visual) | (0) | (90—95) | (0) | (95) | (0) | (95) | (0) | (100) |
| Oven Aged Steelcord T-Adhesion @ 110°C, Cured 30′ @ 149°C—Cured T-Adhesion Pads Heat Aged 2 Days @ 121°C | | | | | | | | |
| 1×5×0.25 mm diam. brass coated wire | | | | | | | | |
| kg/m | 975 | 1650 | 1043 | 1575 | 1143 | 1618 | 1121 | 1597 |
| % rubber coverage | (80) | (90—95) | (85) | (90—95) | (85—90) | (90—95) | (90) | (95—100) |
| 1×5×0.25 mm diam. zinc coated wire | | | | | | | | |
| kg/m | 107 | 1504 | 143 | 1539 | 143 | 1636 | 182 | 1536 |
| % rubber coverage | (0) | (80—85) | (0) | (90) | (0) | (90) | (0) | (90) |
| Steam Bomb Aged Steelcord T-Adhesion @ 110°C, Cured 30′ @ 149°C—Cured T-Adhesion Pads Steam Aged 1 Hour @ 149°C | | | | | | | | |
| 1×5×0.25 mm diam. brass coated wire | | | | | | | | |
| kg/m | 2214 | 2697 | 2500 | 2754 | 2439 | 2850 | 2422 | 2943 |
| % rubber coverage | (70) | (80) | (70—75) | (80—85) | (85) | (90) | (85) | (90—95) |

TABLE II (Cont'd)

| Stock Example I | A | B | C | D | E | F | G | H |
|---|---|---|---|---|---|---|---|---|
| 1×5×0.25 mm diam. zinc coated wire | | | | | | | | |
| kg/m | 172 | 1750 | 164 | 2043 | 186 | 2339 | 196 | 2697 |
| % rubber coverage | (0) | (60) | (0) | (75) | (0) | (70) | (0) | (85—90) |
| Oxygen Bomb Aged Steelcord T-Adhesion @ 110°C, Cured 30′ @ 149°C, Aged in Oxygen Bomb for 24 Hours @ 68°C | | | | | | | | |
| 1×5×0.25 mm diam. brass coated wire | | | | | | | | |
| kg/m | 986 | 2061 | 1096 | 2272 | 1089 | 2186 | 1400 | 2186 |
| % rubber coverage | (0) | (60—65) | (5) | (65—70) | (5) | (80) | (5—10) | (95) |
| 1×5×0.25 mm diam. zinc coated wire | | | | | | | | |
| kg/m | 121 | 2411 | 107 | 2454 | 157 | 2593 | 207 | 2618 |
| % rubber coverage | (0) | (85) | (0) | (90—95) | (0) | (85—90) | (0) | (90—95) |
| Oxygen Bomb Aged Steelcord T-Adhesion @ 110°C, Cured 30′ @ 149°C, Aged in Oxygen Bomb for 48 Hours @ 68°C | | | | | | | | |
| 1×5×0.25 mm diam. brass coated wire | | | | | | | | |
| kg/m | 889 | 1722 | 968 | 1757 | 879 | 1825 | 1057 | 1693 |
| % rubber coverage | (0) | (35—40) | (5) | (60) | (5) | (65—70) | (20) | (65) |
| 1×5×0.25 mm diam. zinc coated wire | | | | | | | | |
| kg/m | 143 | 2011 | 128.6 | 2197 | 146 | 2136 | 161 | 2104 |
| % rubber coverage | (0) | (75) | (0) | (80—85) | (0) | (85) | (0) | (80—85) |

The T-adhesion values are reported in kg/m of wire embedment and % rubber coverages are given in parentheses.

The retarder component functions as a prevulcanization inhibitor and can be, for example, Santogard® PVI by Monsanto, N-(cyclohexylthio)-phthalimide.

The testing of our stabilized and adhesion retaining skim stocks was done on T-adhesion pads prepared by placing 15.2 µm slabs of uncured skim stock on 13 µm fiber reinforced backing. Sample width was 1.27 cm. Clean brass coated wires were placed between two pads of the reinforced skim stock with the wires in contact with the uncured skim at 1.27 cm intervals. The pads were placed in a mold and were cured for 30 minutes at 149°C. Testing was done on an Instron Universal Tester at 254 cm per minute and 110°C. Steam bomb aging of the samples was one in a pressure tight bomb at 1 atmosphere pressure, 149°C, and a saturated steam atmosphere.

The unconditioned T-adhesion results set forth in the preceding examples is in kg/m and % coverage as visually determined. The conditioned T-adhesion results are determined after 1 hour in 149°C steam in kg/m with % coverage being determined visually.

Detailed T-adhesion test procedure

1. Using a Clicker machine and a 15×1.3 cm die, prepare an adequate number of calendered and control stock samples for pad building.
2. Use one piece of calendered fabric backing (13 µm).
3. Ply one piece of control rubber stock (15.2 µm) onto the fabric backing.
4. Place sample in building jig with fabric side down.
5. Place ten cords (of brass coated wire) approximately 17.8 cm in length equally spaced on top of the two piece assembly.
6. Invert another 2 ply assembly, made as in items 1, 2 and 3 on top of cords so that cords are between 2 layers of stock to be tested.
7. This assembly should now fit snugly into the mold.
8. Adhesion pads shall be cured for 30 minutes at 149°C, and then allowed to equilibrate for 24 hours.
9. Testing Machine: 1130 Instron Universal Tester.
10. Test speed 254 cm/minute; temperature 110°C after a 20′ preheat.
11. The top grip shall be of a special holder made for the cured sample, with a slot in the bottom to permit the sample to be inserted with the wire protruding. The bottom grip shall be a wedge type, designed to exert increasing tightening as the wire is pulled.
12. Record 10 pulls and average. Multiply by 35.72 to get kg/m.

The preceding Examples can be varied within the scope of the total specification disclosure, as it would be understood and practiced by one skilled in the art, to achieve essentially the same results. Equivalent reactants can be used.

It is common practice in the art to increase the strength of rubber products such as a rubber belt or a pneumatic tire by incorporating therein a zinc plated or a copper-zinc (brass) alloy plated steel cord. Such prior art rubber-steel cord composites must retain satisfactory adhesion of the steel cord to the vulcanized rubber, particularly when such skim stock steel cord composite has been stored for a long period of time in a humid atmosphere prior to fabrication with the rubber.

When the skim stock of the present invention is used in the conventional steel cord tire construction it is extremely important that the bond between the rubber ply stock and the wire fabric also be as flexible and as strong as possible for efficient use under operating conditions; this is especially important in the case of truck tires which are subjected to high loads and speeds with consequent heat buildup due to the rapid flexing of the plies.

The rubber to be used in the practice of this invention includes vulcanizable rubbers. Rubbers that can be utilized include natural rubbers, synthetic rubbers, polyisoprene, polybutadiene, copolymers of butadiene and styrene and the like, and blends thereof. The particular rubber composition selected is preferably a blend of natural rubber and polybutadiene. An extender oil, when utilized, can be, for example, any known medium process oil, aromatic or naphthenic hydrocarbon derived.

The antioxidant selected can be, for example, N - (1,3 - dimethyl butyl) - N′ - phenyl - p - phenylenediamine, known in the trade as Santoflex 13; or other phenyl-p-phenylenediamine derivatives.

The accelerator preferably utilized in the practice of our invention is N - oxydiethylene benzothiazole - 2 - sulfenamide; this accelerator is commercially available from American Cyanamid and is known as NOBS Special. Other accelerators such as N - t - butyl - 2 - benzothiazole - sulfenamide can also be utilized; the particular accelerator selected is not critical.

Any known rubber reinforcing carbon black can be used, such as the known HAF, ISAF and other carbon blacks. Curing is preferably achieved through use of sulfur as a sulfur/oil blend preferably utilized at a ratio of 80/20. The use of HAF carbon black is preferred. Curing can also be achieved through known peroxide or irradiation means.

Compounding ingredients customarily employed in the rubber compounding art can be added to the skim stock composition and include accelerators, antioxidants, bactericides and the like, color pigments, extenders, reinforcing pigments, softeners, vulcanizing agents, etc. The compounding ingredients are used in the amounts necessary to achieve the desired properties in the resulting vulcanizate as is well known to those skilled in the art.

In steel cord tire construction of this invention it is extremely important, both in new tire construction and retread or repair operations, that the bond between the rubber ply stock and the wire fabric be as flexible and as strong as possible for efficient use under operation conditions; this is especially important in the case of truck tires which are subjected to high loads and speeds with consequent heat buildup due to the rapid flexing of the plies.

The coated wire utilized in the practice of the invention can be, for example, zinc coated or brass plated wire, i.e., 70% Cu, 30% Zn coated steel. The wire can be in the form of a strand, mat, web, ply or braid.

**Claims**

1. A tire having improved adhesion between a cured rubber skim stock of conventional composition, and brassed or zinc coated metal reinforcing members embedded therein characterized in that from 0.5 to 15 phr of cobalt propionate have been incorporated into said stock prior to curing.
2. A tire according to claim 1 wherein said curing is achieved by vulcanization.
3. The tire of claim 1 wherein said composition contains about 2.0 to about 8.0 phr of cobalt propionate.

**Patentansprüche**

1. Reifen mit verbesserter Haftung zwischen einer gehärteten Skim-Kautschuk-Masse herkömmlicher Zusammensetzung und vermessingten oder zinkbeschichteten Metallverstärkungselementen, die in diese eingebettet sind, dadurch gekennzeichnet, daß 0,5 bis 15 phr Kobaltpropionat in die genannte Masse vor dem Härten eingearbeitet worden sind.
2. Reifen nach Anspruch 1, dadurch gekennzeichnet, daß das Härten durch Vulkanisation erzielt wird.
3. Reifen nach Anspruch 1, dadurch gekennzeichnet, daß die Masse etwa 2,0 bis etwa 8,0 phr Kobaltpropionat enthält.

**Revendications**

1. Bandage pneumatique présentant une très bonne adhérence entre un caoutchouc de skim mûri de composition classique et des armatures en métal revêtu de laiton ou de zinc noyées dans la composition, caractérisé en ce qu'une proportion de 0,5 à 15 parties de propionate de cobalt pour 100 parties de caoutchouc a été incorporée à ce dernier avant la maturation.
2. Bandage suivant la revendication 1, dans lequel la maturation est effectuée par une vulcanisation.
3. Bandage suivant la revendication 1, dans lequel la composition contient environ 2,0 à environ 8,0 parties de propionate de cobalt pour 100 parties de caoutchouc.